# DEMANDE DE BREVET EUROPEEN

(11) **EP 1 925 415 A1**
(43) Date de publication de la demande: **28.05.2008**
(21) Numéro de dépôt: 07291399.9
(22) Date de dépôt: 26.11.2007
(51) Int. Cl.: B29C 33/42, A47G 23/06, B29C 33/38

(54) **Procédé de fabrication ou de préparation d' un moule pour la fabrication d'un plateau de service en résine teintée, et plateau de service abtenu au moyen d'un tel moule**

(30) Priorité: 24.11.2006 FR 0610333
(71) Demandeur: Platex Composites, 92700 Colombes (FR)
(72) Inventeur: Warnod Marc, 9220 Neuilly-sur-seine (FR)
(74) Mandataire: Bredema

(57) **Abrégé**

L'invention concerne un procédé de fabrication ou de préparation d'un moule pour la fabrication d'un plateau de service en résine teintée, ledit moule comportant deux éléments de moulage comprenant respectivement une surface de moulage destinée à être en contact avec l'ébauche d'un plateau de service à mouler, ledit procédé étant caractérisé en ce qu'il comporte une étape de grainage de la surface de moulage de chaque élément de moulage.

## Description

L'invention concerne le domaine des plateaux de service, et notamment des plateaux-repas.

L'invention concerne plus particulièrement la fabrication ou la préparation d'un moule destiné à la fabrication d'un plateau de service en résine, et de préférence en résine polyester teintée.

Classiquement, la fabrication des plateaux de service, du type plateau-repas en résine polyester, comprend les étapes suivantes. La première étape consiste à découper et préparer une ébauche de pièce sensiblement plane présentant deux faces : une face constituant la face de réception des plats, couverts ou autres ; l'autre face constituant la face support. Une fois préparée, l'ébauche est disposée dans la cavité d'un moule pour être soumise à une pression et une température pré-établies, pendant un temps suffisant pour atteindre la polymérisation de la résine.

Les moules utilisés pour la fabrication de tels plateaux comportent généralement deux éléments de moulage agencés, lorsqu'ils sont pressés l'un contre l'autre lors d'une opération de moulage, pour définir une cavité de moulage. La cavité de moulage est délimitée par la surface de chaque élément de moulage destinée à être en contact avec l'ébauche de la pièce à mouler. On parlera par la suite « de surface de moulage ».

Les moules utilisés présentent des surfaces de moulage polies afin d'obtenir des pièces moulées d'aspect lisse et brillant.

Les moules sont polis sous l'action mécanique de machines vibrantes munies de disques abrasifs. Le polissage final comporte une succession de phases de polissage réalisées manuellement à l'aide de chiffons doux imprégnés de crème de polissage, les chiffons employés présentant une finesse de grain décroissante au fur et à mesure de l'avancement du polissage final.

Cette technique de fabrication présente cependant des limites, notamment en ce qu'elle ne peut réellement s'appliquer que pour la fabrication de plateaux de couleur claire et unie, ou des plateaux de couleur plus foncée mais non unie. Dans ce dernier cas, l'aspect visuel obtenu est du type « granit ».

En effet, lorsque l'ébauche destinée à être moulée est constituée d'une résine teintée foncée et unie, les défauts causés par l'opération même de moulage, et notamment par le fluage de la matière dans le moule, apparaissent sur la pièce finale moulée.

En outre, les pièces de teinte foncée et de finition brillante présentent également l'inconvénient de laisser apparaître les marques et rayures causées par des chocs, des frottements ou autres lors de leur utilisation ou de leur stockage. Or, des marques et rayures-confèrent au plateau un aspect rapidement usagé.

L'invention vise notamment à pallier les inconvénients susmentionnés en proposant un équipement adéquat ainsi qu'un procédé de fabrication ou de réalisation de l'équipement permettant la réalisation d'un plateau de service teinté, clair ou foncé, et uni, dont les défauts inhérents à la fabrication mais aussi à leur utilisation s'avèrent, d'un point de vue visuel, fortement réduits.

A cet effet, et selon un premier aspect, l'invention concerne un procédé de fabrication ou de préparation d'un moule pour la fabrication d'un plateau de service en résine teintée, ledit moule comportant deux éléments de moulage comprenant respectivement une surface de moulage destinée à être en contact avec l'ébauche d'un plateau de service à mouler. Le procédé est remarquable en ce qu'il comporte une étape de grainage de tout ou partie de la surface de moulage d'au moins un des éléments de moulage.

Par le terme « grainage », on entend une opération consistant à réaliser de aspérités sur la surface ou les parties de la surface du moule concernées.

En d'autres termes, la surface du moule, par opposition à une surface lisse des moules utilisés pour la fabrication de plateaux de service lisses et brillants, présente un état rugueux. Et c'est cet état rugueux de la surface du moule destinée à être en contact avec la pièce à mouler qui va permettre d'obtenir une pièce finale d'aspect mat et non lisse.

Par ailleurs, le grainage du moule permet d'obtenir une pièce finale ayant un effet esthétique particulier, à savoir un effet sablé.

Afin de simplifier la lecture de la présente description, l'expression « la ou les surface(s) de moulage » sera employée par la suite en remplacement de l'expression « une partie au moins de la surface de moulage d'un des éléments de moulage au moins ».

Selon un mode de réalisation préféré de l'invention, le grainage est réalisé sur l'ensemble de la surface de moulage de chaque élément de moulage.

Ainsi, l'ensemble de la surface du plateau de service obtenu à l'issue de l'opération de moulage présentera, au toucher, une certaine rugosité. La rugosité du plateau de service sera plus ou moins importante selon le grainage effectué sur la ou les surface(s) de moulage du moule. Il sera cependant préféré de réaliser un léger grainage de la ou des surface(s) de moulage du moule de sorte à obtenir de petites aspérités. Les aspérités formées ne doivent en effet pas avoir de conséquence sur la planéité de la surface du plateau de service obtenu.

Par ailleurs, le grainage de la ou les surface(s) de moulage du moule est réalisé uniformément.

Cette opération de grainage de la ou des surface(s) de moulage peut être réalisée, soit directement sur le moule, soit sur un support intermédiaire destiné à être disposé sur la ou les surface(s) de moulage.

Le support intermédiaire est avantageusement un support préformé s'adaptant aux dimensions du moule et plus particulièrement aux dimensions de la ou des surfaces de moulage à recouvrir. Le grainage de celui-ci peut être réalisé préalablement à sa pose (on parlera de revêtement grainé) ou une fois posé sur la ou les surface(s) de moulage (on parlera de revêtement apte à être grainé).

Avantageusement, le grainage de la surface de moulage ou du support intermédiaire est réalisé sous une action électrochimique. Pour ce faire, le moule, ou du moins la surface du moule destinée à être en contact avec l'ébauche (surface de moulage propre au moule ou support intermédiaire) est constitué dans un matériau conducteur.

Le plateau de service obtenu au moyen d'un tel moule présente une partie de la surface au moins comportant des aspérités.

Selon un deuxième aspect, l'invention concerne un procédé de fabrication d'un plateau de service en résine teintée, comprenant une étape consistant à disposer une ébauche de plateau de service préalablement préparée dans un moule fabriqué ou préparé selon le procédé décrit précédemment, et à mettre en forme l'ébauche de pièce par application d'une pression et d'une température pré-établies, pendant un temps suffisant pour obtenir la polymérisation de la résine.

Ainsi, le plateau obtenu selon le procédé de fabrication ci-dessus présente une partie au moins comportant des aspérités.

Avantageusement, le procédé de fabrication d'un plateau-repas comporte une étape complémentaire de ponçage de la bordure périphérique du plateau.

Selon un troisième aspect, l'invention concerne un moule pour la mise en oeuvre du procédé de fabrication d'un plateau de service tel que décrit ci-dessus.

Le moule est du type comportant deux éléments de moulage comprenant respectivement une surface de moulage destinée à être en contact avec l'ébauche d'un plateau de service. Le moule est remarquable en ce qu'une partie au moins de la surface de moulage d'un des éléments de moulage au moins comporte des aspérités.

Selon une configuration préférée de l'invention, toutes les parties du moule destinées à être en contact avec l'ébauche d'un plateau de service comportent des aspérités de sorte à obtenir, à l'issue de l'opération de moulage, un plateau de service présentant des faces supérieures et inférieures rugueuses.

Comme précédemment, il peut être prévu que la ou les surface(s) de moulage soi(en)t pourvue(s) d'un support intermédiaire (ou revêtement) présentant des aspérités suite à une action de grainage. Avantageusement, et afin de préserver le moule existant, il peut être prévu de réaliser un support apte à être retiré du moule. Avantageusement, le support constitue un support réutilisable.

Selon un autre aspect, l'invention concerne un plateau-repas en résine polyester teintée présentant deux faces, une face supérieure dite face de réception destinée à recevoir les plats, couverts et autres, et une face inférieure dite face support, et dont l'une des faces au moins, et de préférence les deux, comporte des aspérités. Ces aspérités permettent de masquer en partie les traces de rayures ou similaires occasionnées par des chocs ou des frottements, et présentes sur la surface du plateau.

Enfin, la présence d'aspérités sur la surface de stockage du plateau confère en outre une certaine adhérence des plats ou autres disposés sur ladite surface. Il est bien entendu évident que cette adhérence est fonction de la rugosité de la surface concernée.

L'invention est décrite dans ce qui précède à titre d'exemple. Il est entendu que l'homme du métier est à même de réaliser différentes variantes de l'invention sans pour autant sortir de l'invention.

## Revendications

1. Procédé de fabrication ou de préparation d'un moule pour la fabrication d'un plateau de service en résine teintée, ledit moule comportant deux éléments de moulage comprenant respectivement une surface de moulage destinée à être en contact avec l'ébauche d'un plateau de service à mouler, ledit procédé étant **caractérisé en ce qu'**il comporte une étape de grainage de la surface de moulage de chaque élément de moulage.

2. Procédé de fabrication ou de préparation d'un moule selon la revendication 1, **caractérisé en ce que** l'une au moins des surfaces de moulage est pourvue, en tout ou partie, d'un revêtement grainé.

3. Procédé de fabrication ou de préparation d'un moule selon la revendication 1, **caractérisé en ce que** l'une au moins des surfaces de moulage est pourvue, en tout ou partie, d'un revêtement apte à être grainé.

4. Procédé de fabrication ou de préparation d'un moule selon l'une quelconque des revendications précédentes, **caractérisé en ce que** le grainage de la surface de moulage est réalisé sous une action électrochimique, la surface de moulage étant constituée dans un matériau conducteur.

5. Procédé de fabrication d'un plateau de service en résine teintée, comportant une étape consistant à disposer une ébauche de plateau de service préalablement préparée dans un moule fabriqué ou préparé selon l'une quelconque des revendications précédentes et à mettre en forme l'ébauche de pièce par application d'une pression et d'une température pré-établies, pendant un temps suffisant pour obtenir la polymérisation de la résine.

6. Moule pour la mise en oeuvre du procédé de fabrication d'un plateau de service selon la revendication précédente, du type comportant deux éléments de moulage comprenant respectivement une surface de moulage destinée à être en contact avec l'ébauche d'un plateau de service, **caractérisé en ce que** la surface de moulage des éléments de moulage comportent des aspérités.

7. Moule selon la revendication précédente, **caractérisé en ce qu'**une partie au moins de la surface de moulage d'un des éléments de moulage au moins est pourvue d'un revêtement présentant des aspérités.

8. Plateau de service, notamment plateau-repas, en résine teintée, du type comprenant deux faces, une face supérieure de réception destinée à recevoir les plats, couverts et autres, et une face inférieure dite face support, **caractérisé en ce que** chacune des faces comporte des aspérités.

9. Plateau de service selon la revendication précédente, **caractérisé en ce qu'**il est en polyester.
